# EUROPÄISCHE PATENTSCHRIFT

(11) **EP 2 806 168 B1**
(45) Veröffentlichungstag und Bekanntmachung des Hinweises auf die Patenterteilung: **15.03.2017**
(21) Anmeldenummer: 13168535.6
(22) Anmeldetag: 21.05.2013
(51) Int. Cl.: F04D 15/00, F04D 15/02, F24D 17/00, F24J 2/34, F24J 2/40, F24D 19/10

(54) **Umwälzpumpenaggregat und solarthermische Anlage damit**
Circulation pump unit and solar-thermal assembly therewith
Module de pompe de circulation et installation thermosolaire le comprenant

(43) Veröffentlichungstag der Anmeldung: 26.11.2014
(73) Patentinhaber: Grundfos Holding A/S, 8850 Bjerringbro (DK)
(72) Erfinder: Mortensen, Lars Sund, 20 9600 Aars (DK); Jensen, Kim Hulegaard, 37 8840 Rodkaersbro (DK)
(74) Vertreter: Patentanwälte Vollmann & Hemmer

(56) Entgegenhaltungen:
- EP-A1- 1 426 699
- DE-A1- 4 112 758
- DE-A1- 10 334 436
- DE-A1- 19 705 008
- DE-A1-102006 009 047
- US-A1- 2012 183 014

## Beschreibung

Die Erfindung betrifft ein Umwälzpumpenaggregat sowie eine solarthermische Anlage mit einem solchen Umwälzpumpenaggregat.

Solarthermische Anlagen weisen zumindest einen Solarkollektor und einen Wasserspeicher auf, in welchem beispielsweise zu erwärmendes Brauchwasser gespeichert wird. Der Solarkollektor ist mit einem in oder an dem Wasserspeicher angeordneten Wärmetauscher über einen Heizkreislauf verbunden, in welchem eine Umwälzpumpe angeordnet ist, welche das von dem Solarkollektor erwärmte Heizmedium in den Wärmetauscher des Wasserspeichers und aus diesem zurück in den Solarkollektor fördert. Es ist bekannt, diese Umwälzpumpe in ihrer Drehzahl in Abhängigkeit des Wärmebedarfs im Wasserspeicher und der im Solarkollektor bereitgestellten Wärmemenge zu steuern. Hierzu weisen die bekannten Anlagen zumindest zwei Temperatursensoren auf, einen in dem Solarkollektor und einen in dem Wasserspeicher. Diese beiden Temperatursensoren sind mit einer Steuereinrichtung, welche gegebenenfalls in die Umwälzpumpe integriert sein kann, zu verbinden. Solche Verbindungen der Sensoren sind bei der Montage und im Betrieb fehleranfällig.

EP 1 426 699 A1 offenbart eine Regelvorrichtung für Umwälzpumpen, bei welcher die Pumpe einen integrierten Regler aufweist, welcher unter anderem mit Temperatursensoren im Vor- und Rücklauf eines Heizsystems zusammenwirkt. Der Regler regelt den Durchfluss in Abhängigkeit einer Temperatur im Vorlauf und im Rücklauf. Ferner ist ein Drucksensor vorhanden und der Regler wertet den von dem Drucksensor aufgenommenen Druckwert als ein die Temperatur in einer Wärmequelle repräsentierendes Signal aus. Dieses System benötigt somit neben den Temperatursensoren einen zusätzlichen Drucksensor.

DE 103 34 436 A1 offenbart eine Solaranlage mit einem Speicher und einer Pumpe, welche einen flüssigen Wärmeträger von einem Solarkollektor durch den Speicher zum Erwärmen des Wassers in dem Speicher fördert. In diesem Kreislauf sind ein erster Temperatursensor ausgangsseitig des Speichers und ein zweiter Temperatursensor eingangsseitig des Speichers angeordnet. Dabei wird über den ausgangsseitig des Speichers angeordneten Temperatursensor bei Betrieb der Pumpe die Temperatur des Wärmeträgers erfasst, welche in diesem Zustand im Wesentlichen der Temperatur des Speichers entspricht. Darüber hinaus ist es aus dem Dokument bekannt, den Volumenstrom des Pumpenaggregates in Abhängigkeit der Temperaturdifferenz zwischen den beiden Temperatursensoren zu regeln. Nachteilig bei dieser Ausgestaltung ist, dass zwei Temperatursensoren erforderlich sind und dass die Temperatur des Speichers nur unmittelbar nach oder während des Betriebs der Pumpe bestimmt werden kann.

Es ist Aufgabe der Erfindung, einen vereinfachten Aufbau einer solarthermischen Anlage zu ermöglichen, welche im Betrieb eine geringere Fehleranfälligkeit aufweist und darüber hinaus auf eine einfache Weise die Bestimmung der Temperatur in einem Flüssigkeitsspeicher ermöglicht.

Diese Aufgabe wird gelöst durch ein Umwälzpumpenaggregat für eine solarthermische Anlage mit den in Anspruch 1 angegebenen Merkmalen sowie durch eine solarthermische Anlage mit den in Anspruch 11 angegebenen Merkmalen. Bevorzugte Ausführungsformen ergeben sich aus den zugehörigen Unteransprüchen, der nachfolgenden Beschreibung sowie den beigefügten Figuren.

Das erfindungsgemäße Umwälzpumpenaggregat weist einen elektrischen Antriebsmotor und eine Steuereinrichtung, vorzugsweise zur Steuerung bzw. Regelung dieses elektrischen Antriebsmotors auf. Insbesondere ist die Steuereinrichtung in der Art ausgebildet, dass sie die Drehzahl des elektrischen Antriebsmotors steuern bzw. regeln kann. Der elektrische Antriebsmotor treibt in bekannter Weise zumindest ein Laufrad einer Kreiselpumpe an. Die Kreiselpumpe bildet vorzugsweise in bekannter Weise mit dem elektrischen Antriebsmotor eine Baueinheit in Form des Umwälzpumpenaggregotes.

Erfindungsgemäß weist das Umwälzpumpenaggregat zumindest einen internen Temperatursensor auf. Dieser interne Temperatursensor ist in dem Umwälzpumpenaggregat so angeordnet, dass er die Temperatur des von dem Umwälzpumpenaggregat geförderten Mediums erfasst. Dazu ist der Temperatursensor vorzugsweise im Inneren eines Pumpengehäuses des Umwälzpumpenaggregotes an oder in dem Strömungsweg für das zu fördernde Medium bzw. die zu fördernde Flüssigkeit angeordnet. Der Temperatursensor kann dabei so angeordnet sein, dass er direkt mit dem zu fördernden Medium in Kontakt kommt, kann jedoch beispielsweise auch wärmeleitend mit einer den Strömungsweg durch das Pumpengehäuse definierenden Wandung verbunden sein. Dies bietet sich insbesondere dann an, wenn das Pumpengehäuse, welches die Strömungswege definiert, aus einem wärmeleitenden Material, wie z. B. Metall ausgebildet ist. Besonders bevorzugt kann der Temperatursensor ein Infrarotsensor sein, welcher an dem Umwälzpumpenaggregat angeordnet ist und die Oberflächentemperatur einer Wandung des Pumpengehäuses misst, welche in Kontakt mit dem zu fördernden Medium ist. Ein solcher Infrarotsensor kann insbesondere in einem Elektronikgehäuse außerhalb des Pumpengehäuses mit Blick auf die Wandung des Pumpengehäuses angeordnet sein. Besonders bevorzugt kann ein solcher Infrarotsensor auf einer im Elektronikgehäuse oder Gehäuse des Pumpenaggregates angeordneten Leiterplatte platziert sein und auf die Wandung eines Strömungsweges gerichtet sein. So kann die Blickrichtung des Infrarotsensors beispielsweise auf das Spaltrohr im Antriebsmotor gerichtet sein, welches mit dem zu fördernden Medium gefüllt ist und vorzugsweise wärmeleitend, insbesondere aus Metall ausgebildet ist. Der Temperatursensor ist so ausgebildet, dass er ein zu der Temperatur des von dem Umwälzpumpenaggregat geförderten Mediums korrespondierendes Temperatursignal an die Steuereinrichtung ausgibt. Dies ermöglicht es der Steuereinrichtung, den Antriebsmotor auf Grundlage des erfassten Temperatursignals des zumindest einen internen Temperatursensors zu steuern und/oder zu regeln, insbesondere in der Drehzahl zu regeln. Dabei können in die Steuerung bzw. Regelung noch weitere Parameter, beispielsweise Signale von weiteren Sensoren einfließen.

Erfindungsgemäß ist die Steuereinrichtung in das Umwälzpumpenaggregat integriert. So sind die die Steuereinrichtung bildenden elektrischen und elektronischen Bauteile vorzugsweise in ein Elektronikgehäuse bzw. einen Klemmenkasten, welcher an dem elektrischen Antriebsmotor des Umwälzpumpenaggregotes angeordnet ist, integriert. So kann das Umwälzpumpenaggregat eine integrierte Baueinheit bilden, welche sämtliche für den Betrieb des Umwälzpumpenaggregotes erforderlichen Komponenten, nämlich den elektrischen Antriebsmotor, die eigentliche Pumpe bzw. Kreiselpumpe und die elektrischen bzw. elektronischen Bauteile, welche die Steuereinrichtung zur Steuerung bzw. Regelung des Antriebsmotors bilden, umfasst. Vorzugsweise weist die Steuereinrichtung eine Kommunikationsschnittstelle auf, welche zur Kommunikation mit zumindest einer externen Einrichtung, insbesondere einem Sensor, Aktor und/oder zumindest einer externen Steuerung ausgebildet ist. Über diese Kommunikationsschnittstelle kann das Pumpenaggregat beispielsweise mit einer übergeordneten Steuerung, weiteren untergeordneten Pumpenaggregaten, Aktoren, wie beispielsweise Ventilen oder weiteren externen Sensoren kommunizieren bzw. Signale von solchen Einrichtungen empfangen.

Besonders bevorzugt ist die Kommunikationsschnittstelle zur Kommunikation mit zumindest einem externen Temperatursensor ausgebildet. Dies ist insbesondere ein externer Temperatursensor, welcher zur Anordnung in oder an einem Solarkollektor zum Erfassen der Fluidtemperatur im Solarkollektor vorgesehen ist.

Die Steuereinrichtung ist weiter bevorzugt derart ausgebildet, dass sie den elektrischen Antriebsmotor in Abhängigkeit des Temperatursignals von dem internen Temperatursensor und eines Temperatursignals von dem zumindest einen externen Temperatursensor in seiner Drehzahl regelt bzw. steuert. So kann die Steuereinrichtung das Pumpenaggregat so steuern, dass beispielsweise ein gewünschter Durchfluss in Abhängigkeit der erfassten Temperatursignale eingestellt wird. Dabei kann beispielsweise der externe Temperatursensor die Temperatur an einer Wärmequelle wie einem Solarkollektor und der interne Temperatursensor die Temperatur des zu erwärmenden Mediums, insbesondere zu erwärmenden Wassers erfassen. Der Antriebsmotor kann dann so gesteuert bzw. geregelt werden, dass er einen erforderlichen Durchfluss einstellt, welcher z. B. zur Erwärmung von Brauchwasser über einen Wärmetauscher erforderlich ist.

Die Kommunikationsschnittstelle der Steuereinrichtung kann als eine drahtgebundene elektrische Kommunikationsschnittstelle, aber beispielsweise auch als eine optische Kommunikationsschnittstelle ausgebildet sein. Besonders bevorzugt ist die Kommunikationsschnittstelle als drahtlose Schnittstelle und insbesondere als Funkschnittstelle ausgebildet. Dadurch wird der Installationsaufwand insbesondere bei Verbindung mit weiter entfernt liegenden Bauteilen minimiert, da auf eine aufwändige Verdrahtung verzichtet werden kann. Die zugehörigen externen Bauteile bzw. Einrichtungen, welche mit der Kommunikationsschnittstelle der Steuereinrichtung kommunizieren sollen, weisen dann zweckmäßigerweise entsprechend ausgebildete Kommunikationsschnittstellen auf, d. h. gegebenenfalls drahtgebundene oder drahtlose Schnittstellen auf. Besonders bevorzugt weisen auch diese Einrichtungen Funkschnittstellen auf. So kann beispielsweise ein externer Temperatursensor mit einer korrespondierenden Schnittstelle, insbesondere Funkschnittstelle, versehen sein, welcher auf diese Weise mit der Steuereinrichtung über deren Kommunikationsschnittstelle kommunizieren kann. Dabei ist zumindest eine unidirektionale Kommunikation von dem Sensor zu der Steuereinrichtung vorgesehen. Gegebenenfalls kann auch eine bidirektionale Kommunikation beispielsweise zur Kopplung der externen Einrichtung mit der Steuereinrichtung vorgesehen sein. Eine solche bidirektionale Kommunikation bietet sich darüber hinaus an, wenn die externe Einrichtung beispielsweise ein Aktor, wie ein zu steuerndes Ventil, ist.

Gemäß einer weiteren bevorzugten Ausführungsform der Erfindung ist die Kommunikationsschnittstelle der Steuereinrichtung zur automatischen Kopplung mit einer Kommunikationsschnittstelle der zumindest einen externen Einrichtung ausgebildet. Eine solche Ausgestaltung ist besonders dann von Vorteil, wenn beide Teile, d. h. die Steuereinrichtung und die externe Einrichtung beispielsweise über ein Netzwerk- oder Bussystem miteinander verbunden sind, in welches noch weitere Bauteile oder Einrichtungen eingebunden sind. In einem solchen Netzwerk, beispielsweise einem Datennetzwerk, können die Steuereinrichtung und die externe Einrichtung sich dann vorzugsweise selbstständig erkennen und zur Kommunikation automatisch koppeln. Darüber hinaus bietet sich diese Ausgestaltung dann an, wenn die Kommunikationsschnittstellen als Funkschnittstellen ausgebildet sind. So wird die Installation vereinfacht, da beide Geräte, wenn sie in Betrieb genommen worden sind, über entsprechende Signale so miteinander kommunizieren, dass sie sich selbstständig erkennen und automatisch zur Kommunikation miteinander koppeln. So kann sich beispielsweise ein externer Temperatursensor automatisch mit der Kommunikationsschnittstelle der Steuereinrichtung finden und derart koppeln, dass die Steuereinrichtung das Temperatursignal dieses gekoppelten externen Temperatursensor zur Steuerung bzw. Regelung heranzieht. Eine solche Kopplung ist gerade dann wesentlich, wenn mehrere Sensoren oder Steuereinrichtungen in Reichweite sind, da dann eine feste Zuordnung erforderlich ist, um Fehlfunktionen vermeiden zu können.

Weiter bevorzugt ist die Kommunikationsschnittstelle der Steuereinrichtung derart ausgebildet, dass sie automatisch eine Kopplung bzw. Kommunikationsverbindung mit einer Kommunikationsschnittstelle einer zur Kopplung geeigneten externen Einrichtung bewirkt, sofern diese externe Einrichtung noch nicht mit einem anderen Pumpenaggregat bzw. dessen Steuereinrichtung gekoppelt bzw. verbunden ist. Auf diese Weise wird bei der automatischen Kopplung verhindert, dass eine externe Einrichtung, beispielsweise ein Temperatursensor versehentlich mit den Steuereinrichtungen zweier Pumpenaggregate gekoppelt wird. So kann die Zuordnung einer externen Einrichtung zu genau einer Steuereinrichtung sichergestellt werden. Alternativ ist es jedoch auch denkbar, in komplexen Systemen eine externe Einrichtung mit zwei Pumpenaggregaten zur Kommunikation zu koppeln, beispielsweise das Signal eines externen Temperatursensors zwei Pumpenaggregaten bzw. deren Steuereinrichtungen zur Verfügung zu stellen, wenn beide Pumpenaggregate auf Grundlage desselben Temperatursignals von diesem externen Temperatursensor gesteuert bzw. geregelt werden sollen. So kann gegebenenfalls ein externes Bauteil wie ein Temperatursensor eingespart werden. Dazu kann die externe Einrichtung zwei oder mehr zur Kopplung bzw. Verbindung geeignete Kommunikationsschnittstellen oder Ein- bzw. Ausgänge aufweisen.

Besonders bevorzugt ist die Steuereinrichtung des erfindungsgemäßen Umwälzpumpenaggregotes zur Steuerung einer solarthermischen Anlage mit zumindest einem Flüssigkeitsspeicher und zumindest einem Solarkollektor zum Erwärmen der Flüssigkeit in dem Flüssigkeitsspeicher ausgebildet, wobei das Umwälzpumpenaggregat zum Einbau in einen Heizkreislauf zwischen dem Flüssigkeitsspeicher und dem Solarmodul vorgesehen ist. In einer solchen Anlage kann die Steuereinrichtung des Umwälzpumpenaggregotes die gesamte Steuerung bzw. Regelung der solarthermischen Anlage übernehmen, d. h. insbesondere den Antriebsmotor des Umwälzpumpenaggregotes so steuern bzw. regeln, dass die Flüssigkeit in dem Flüssigkeitsspeicher von dem Solarkollektor in gewünschter Weise erwärmt wird. So kann auf eine externe Steuereinrichtung verzichtet werden und die Installation der gesamten Anlage wird deutlich vereinfacht. Die Steuereinrichtung ist vorzugsweise in das Umwälzpumpenaggregat integriert, wodurch die Montage besonders vereinfacht wird. Die Steuereinrichtung des Umwälzpumpenaggregates kann mit weiteren externen Einrichtungen kommunizieren, z. B. gegebenenfalls weitere Pumpenaggregate steuern bzw. regeln, Ventile aktivieren und gegebenenfalls Daten von externen Sensoren, wie Durchflusssensoren und/oder Temperatursensoren erfassen und diese bei der Steuerung bzw. Regelung der solarthermischen Anlage berücksichtigen bzw. die Anlage basierend auf den eingehenden Messwerten steuern bzw. regeln.

Erfindungsgemäß ist die Steuereinrichtung, bevorzugt zur Steuerung einer solarthermischen Anlage, derart ausgebildet, dass sie basierend auf dem Temperatursignal des internen Temperatursensors die Temperatur der Flüssigkeit in einem mit dem Umwälzpumpenaggregat über einen Heizkreislauf verbundenen Flüssigkeitsspeicher näherungsweise bestimmt. Diese Ausgestaltung hat den Vorteil, dass auf einem Temperatursensor am oder im Flüssigkeitsspeicher selber verzichtet werden kann. Stattdessen wird die Temperatur im Flüssigkeitsspeicher, welche zur Steuerung der solarthermischen Anlage erforderlich ist, über den internen Temperatursensor des Umwälzpumpenaggregotes indirekt bestimmt. Dadurch vereinfacht sich der Aufbau der solarthermischen Anlage, da auf einen externen Temperatursensor und dessen Verbindung mit der Steuereinrichtung verzichtet werden kann. Durch diese Maßnahme wird zum einen die Installation der Anlage vereinfacht und zum anderen erhöht sich auch die Zuverlässigkeit im Betrieb der Anlage.

Das Umwälzpumpenaggregat ist im Strömungsweg des Heizmediums vorzugsweise ausgangsseitig eines Wärmetauschers, welcher an oder in dem Flüssigkeitsspeicher angeordnet ist, gelegen, sodass die Temperatur des Heizmediums in dem Heizkreislauf, welches aus dem Wärmetauscher des Flüssigkeitsspeichers austritt, im Wesentlichen der Temperatur im Inneren des Flüssigkeitsspeichers entspricht. Wenn nun die Temperatur des Heizmediums durch den internen Temperatursensor des Umwölzpumpenaggregotes erfasst wird, kann so auf die Temperatur im Inneren des Flüssigkeitsspeichers geschlossen werden. Gegebenenfalls kann die Steuereinrichtung hierbei Korrekturen vornehmen, beispielsweise auf Grundlage individueller von der Anlage abhängiger Korrekturfaktoren. So kann beispielsweise der Abstand des Umwälzpumpenaggregates von dem Flüssigkeitsspeicher, durch den es zu einer Auskühlung des Heizmediums zwischen dem Flüssigkeitsspeicher und dem Umwälzpumpenaggregat kommen kann, bei der Steuerung berücksichtigt werden.

Die Steuereinrichtung ist derart ausgebildet, dass sie auch bei Stillstand des Pumpenaggregates, d. h. wenn kein Heizmedium gefördert wird, die Temperatur im Flüssigkeitsspeicher zumindest annähernd bestimmen kann. Dazu ist die Steuereinrichtung so ausgebildet, dass sie die Temperatur der Flüssigkeit im Flüssigkeitsspeicher bei Stillstand des Umwälzpumpenaggregates auf Grundlage der zuletzt bei Betrieb des Umwälzpumpenaggregates von dem internen Temperatursensor erfassten Temperatur ermittelt. Dabei kann die Steuereinrichtung so ausgebildet sein, dass sie die Temperatur ausgehend von dem zuletzt ermittelten Temperaturwert bei Betrieb des Umwälzpumpenaggregotes im zeitlichen Verlauf entlang einer vorgegebenen Kennlinie fortschreibt oder extrapoliert.

Weiterhin ist es bevorzugt, dass die Steuereinrichtung derart ausgestaltet ist, dass der Bestimmung der Temperatur der Flüssigkeit in dem Flüssigkeitsspeicher eine vorgegebene abfallende Kennlinie für den zeitlichen Verlauf der Temperatur zugrundegelegt wird, wobei die Kennlinie vorzugsweise linear oder exponentiell abfallend verläuft. Dabei ist die Steuereinrichtung insbesondere so ausgebildet, dass sie die Temperatur der Flüssigkeit in dem Flüssigkeitsspeicher auf Grundlage einer solchen vorgegebenen Kennlinie dann bestimmt, wenn der Antriebsmotor des Pumpenaggregates ausgeschaltet ist, d. h. das Umwälzpumpenaggregat nicht in Betrieb ist. In diesem Zustand wird kein Heizmedium von dem Flüssigkeitsspeicher zu dem Umwälzpumpenaggregat gefördert und der interne Temperatursensor bestimmt somit nicht die aktuelle Temperatur des aus dem Flüssigkeitsspeicher bzw. dessen Wärmetauschers austretenden Heizmediums. Insofern wird in diesem Zustand keine aktuelle Temperatur der Flüssigkeit in dem Flüssigkeitsspeicher erfasst. Die genannte Bestimmung der Temperatur auf Grundlage einer vorgegebenen Kennlinie erfolgt dann ausgehend von dem zuletzt erfassten aktuellen Temperaturwert bei Betrieb des Umwälzpumpenaggregotes, d. h. bei laufendem Antriebsmotor. Ausgehend von diesem letzten Temperaturwert, welcher bei Betrieb des Umwälzpumpenaggregotes von dem internen Temperatursensor erfasst wurde, wird dann auf Grundlage der vorgegebenen Kennlinie der aktuelle Temperaturwert der Flüssigkeit in dem Flüssigkeitsspeicher bei ausgeschalteten Pumpenaggregat geschätzt bzw. extrapoliert.

Die Kennlinie, insbesondere eine abfallenden Kennlinie berücksichtigt dabei ein Auskühlen der Flüssigkeit in dem Flüssigkeitsspeicher, wenn keine Wärmezufuhr gegeben ist. Wenn das Umwälzpumpenaggregat nicht in Betrieb ist, erfolgt keine Wärmezufuhr von dem Solarkollektor. Die Auskühlung ergibt sich dabei zum einen aufgrund von Wärmeverlusten des Flüssigkeitsspeichers in Abhängigkeit von dessen Insolation. Die Art und Qualität der Isolation des Flüssigkeitsspeichers kann dabei in der Kennlinie berücksichtigt sein. Zum anderen tritt eine Auskühlung beispielsweise dann ein, wenn aus dem Flüssigkeitsspeicher erwärmtes Brauchwasser entnommen wird und gleichzeitig kaltes Brauchwasser nachströmt. Dies könnte durch einen Durchflusssensor, welcher die Brauchwasserentnahme erfasst, in der Steuerung berücksichtigt werden, um die aktuelle Temperatur genauer zu schätzen. Alternativ kann eine durchschnittliche Brauchwasserentnahme in der Kennlinie, auf deren Grundlage die Temperatur bestimmt bzw. geschätzt wird, berücksichtigt sein.

Die Erfindung betrifft neben dem vorangehend beschriebenen Umwölzpumpenaggregat auch eine solarthermische Anlage mit zumindest einem Solarkollektor, zumindest einem Flüssigkeitsspeicher und zumindest einem in einem Heizkreislauf zwischen dem Solarkollektor und dem Flüssigkeitsspeicher angeordneten Umwälzpumpenaggregat, welches gemäß der vorangehenden Beschreibung ausgebildet ist. In einer solchen solarthermischen Anlage kann die Steuereinrichtung des Umwälzpumpenaggregates vorzugsweise, wie vorangehend beschrieben, die Steuerung der gesamten solarthermischen Anlage übernehmen. Die Anordnung des integrierten Temperatursensors in dem Umwälzpumpenaggregat hat dabei den vorangehend beschriebenen Vorteil, dass über diesen internen Temperatursensor die Temperatur in dem Flüssigkeitsspeicher zumindest angenähert bestimmt werden kann, sodass für die Steuerung bzw. Regelung der solarthermischen Anlage ein Temperaturwert für die Temperatur der Flüssigkeit in dem Flüssigkeitsspeicher bekannt ist, ohne einen Temperatursensor direkt an oder in dem Flüssigkeitsspeicher anzuordnen. Dadurch wird der Aufbau der gesamten solarthermischen Anlage vereinfacht, da es nicht erforderlich ist, in oder an dem Flüssigkeitsspeicher einen Temperatursensor zu montieren und diesen mit der Steuereinrichtung zur Kommunikation zu verbinden. Dadurch erleichtert sich die Installation der Anlage, die Gefahr von Fehlinstallationen wird vermieden und darüber hinaus wird die Ausfallsicherheit der Anlage erhöht.

Besonders bevorzugt ist an dem Solarkollektor zumindest ein externer Temperatursensor angeordnet, der die Temperatur eines Heizmediums in dem Solarkollektor erfasst und eine Kommunikationsschnittstelle aufweist, über welche er mit der Kommunikationsschnittstelle der Steuereinrichtung des Umwälzpumpenaggregates derart gekoppelt ist, dass die Steuereinrichtung Temperatursignale von dem externen Temperatursensor empfängt. Bevorzugt sind die Kommunikationsschnittstellen als Funk-Schnittstellen ausgebildet. Durch die Integration des einen Temperatursensors in das Umwälzpumpenaggregat ist der eine externe Temperatursensor ausreichend, um eine Steuerung bzw. Regelung der solarthermischen Anlage auf Grundlage der Temperatur im Solarkollektor und der Temperatur im Flüssigkeitsspeicher zu ermöglichen. Es muss somit gemäß dieser Ausführungsform nur ein externer Temperatursensor mit der Steuereinrichtung verbunden bzw. gekoppelt werden. Der andere Temperatursensor ist direkt in das Umwälzpumpenaggregat integriert und kann dort mit der Steuereinrichtung, insbesondere wenn diese ebenfalls in das Umwälzpumpenaggregat integriert ist, fest verbunden, insbesondere verdrahtet, sein.

Der Heizkreislauf, d. h. der Heizkreislauf durch den Solarkollektor ist vorzugsweise mit dem Flüssigkeitsspeicher über einen Wärmetauscher verbunden, welcher weiter bevorzugt in dem Flüssigkeitsspeicher gelegen ist. So kann der Wärmetauscher im Flüssigkeitsspeicher durch eine im Inneren des Flüssigkeitsspeichers angeordnete Rohrleitung, durch welche das Heizmedium strömt, gebildet sein. Im Flüssigkeitsspeicher kann sich beispielsweise zu erwärmendes Brauchwasser befinden. Alternativ kann der Wärmetauscher auch außerhalb des Flüssigkeitsspeichers angeordnet sein. In diesem Fall könnte die zu erwärmende Flüssigkeit im Flüssigkeitsspeicher durch diesen externen Wärmetauscher, beispielsweise durch eine weitere Umwälzpumpe, gefördert werden.

Nachfolgend wird die Erfindung beispielhaft anhand der beigefügten Figuren beschrieben:
- Fig. 1: schematisch ein erfindungsgemäßes Umwälzpumpenaggregat,
- Fig. 2: schematisch eine solarthermische Anlage gemäß der Erfindung,
- Fig. 3: den Temperaturverlauf in dem Flüssigkeitsspeicher und
- Fig. 4: den Temperaturverlauf in dem Flüssigkeitsspeicher mit einer optimierten Bestimmung der Temperatur durch die Steuereinrichtung.

Das erfindungsgemäße Umwälzpumpenaggregat 2 weist in bekannter Weise ein Pumpengehäuse 4, welches ein hier nicht gezeigtes Laufrad einer Kreiselpumpe enthält, sowie einen mit dem Pumpengehäuse 4 verbundenen elektrischen Antriebsmotor 6 auf, welcher das zumindest eine Laufrad in dem Pumpengehäuse 4 antreibt. Das Pumpengehäuse weist zwei Anschlussstutzen 8, nämlich einen Einlassstutzen und einen Auslassstutzen, zur Verbindung mit externen Rohrleitungen auf.

Der Antriebsmotor 6 kann in bekannter Weise, beispielsweise mit einem Permanentmagnetrotor und vorzugsweise als Spaltrohrmotor ausgebildet sein.

Ein weiterer Bestandteil des Umwälzpumpenaggregats ist eine Steuereinrichtung 10. Die Steuereinrichtung 10 ist in das Pumpenaggregat 2 integriert, beispielsweise in einem Elektronikgehäuse bzw. Klemmenkasten angeordnet, welcher direkt mit dem elektrischen Antriebsmotor 6 verbunden oder gemeinsam mit diesem in einem integrierten Gehäuse angeordnet ist. Die Steuereinrichtung 10 weist einen Frequenzumrichter 12 auf, über welchen die Drehzahl des Antriebsmotors 6 veränderbar ist. D. h. die Steuereinrichtung 10 kann eine Drehzahlsteuerung bzw. eine Drehzahlregelung des Antriebsmotors 6 bewirken. Darüber hinaus weist die Steuereinrichtung 10 ein Steuermodul 14 auf, welches insbesondere als Softwaremodul ausgebildet sein kann. Das Steuermodul 14 steuert den Frequenzumrichter 12, um eine gewünschte Drehzahl des elektrischen Antriebsmotors 6 einzustellen. Darüber hinaus empfängt das Steuermodul 14 Signale bzw. Daten von Sensoren, welche die zur Steuerung bzw. Regelung erforderlichen Eingangssignale bilden.

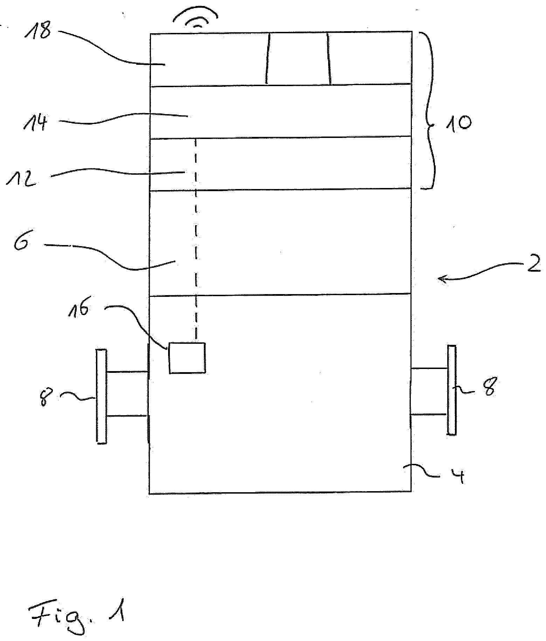

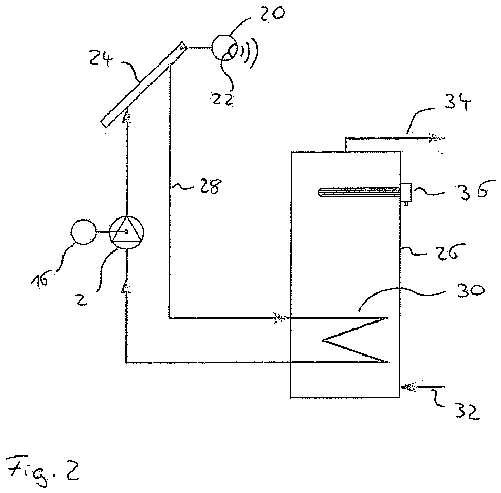

So ist in dem Umwälzpumpenaggregat 2 in dem Pumpengehäuse 4 ein interner Temperatursensor 16 so angeordnet, dass er die Temperatur des Mediums, welches durch das Pumpengehäuse 4 gefördert wird, erfasst. Dieses Medium ist insbesondere ein Heizmedium wie z. B. Wasser in einem Heizkreislauf, wie es nachfolgend beschrieben wird. Der interne Temperatursensor 16 gibt ein Temperatursignal aus, welches dem Steuermodul 14 als eine Eingangsgröße, welche der Steuerung bzw. Regelung zugrundegelegt wird, zugeführt wird, wie in Fig. 1 durch die gestrichelte Linie angedeutet ist. Darüber hinaus weist die Steuereinrichtung 10 eine Kommunikationsschnittstelle 18 auf, welche in diesem bevorzugten Beispiel als Funkschnittstelle ausgebildet ist. Die Kommunikationsschnittstelle 18 dient der Kommunikation mit einem externen Temperatursensor 20, welcher in Fig. 2 gezeigt ist. Der externe Temperatursensor 20 weist eine korrespondierende Kommunikationsschnittstelle 22 auf, welche ebenfalls als Funkschnittstelle ausgebildet ist und die Temperatursignale korrespondierend zu der von dem externen Temperatursensor 20 erfassten Temperatur zu der Kommunikationsschnittstelle 18 der Steuereinrichtung 10 senden kann. In dieser werden so auch die Temperatursignale von den externen Temperatursensoren 20 von dem Steuermodul 14 verarbeitet und der Antriebsmotor 6 entsprechend angesteuert.

Die Kommunikationsschnittstellen 18 und 22 sind vorzugsweise so ausgebildet, dass sie eine automatische Kopplung bzw. Verbindung, d. h. Zuordnung des externen Temperatursensors 20 zu der Steuereinrichtung 10 bzw. deren Steuermodul 14 ermöglichen. D. h. beim ersten Einschalten erkennen sich die Kommunikationsmodule und führen eine Verbindung bzw. Koppelprozedur durch, sodass nachfolgend dem Steuermodul 14 zuverlässig die Ausgangssignale des externen Temperatursensors 20 zugeführt werden.

Fig. 2 zeigt die Anordnung des Umwälzpumpenaggregates 2 gemäß Fig. 1 in einer solarthermischen Anlage. Die solarthermische Anlage weist einen Solarkollektor 24 und einen Flüssigkeitsspeicher 26 auf. Der Solarkollektor 24, wobei dieser auch als eine Anordnung von mehreren Solarkollektoren ausgebildet sein kann, ist über einen Heizkreislauf 28 mit dem Flüssigkeitsspeicher 26 verbunden. In diesem Heizkreislauf 28 ist das Umwälzpumpenaggregat 2 angeordnet, um das Heizmedium durch den Solarkollektor 24 und einen Wärmetauscher 30 im Inneren des Flüssigkeitsspeichers 26 zu fördern. Dabei ist da Umwälzpumpenaggregat 2 in Strömungsrichtung durch den Heizkreislauf 28 ausgangsseitig des Wärmetauschers 30, d. h. des Flüssigkeitsspeichers 26 angeordnet. Bei dieser Anordnung hat die Temperatur des Heizmediums, welches aus dem Wärmetauscher 30 austritt, im Wesentlichen dieselbe Temperatur wie die Flüssigkeit im Inneren des Flüssigkeitsbehälters 26 im Bereich des Wärmetauschers 30. Diese Temperatur wird beim Durchfluss durch das Pumpenaggregat 2 von dem dort angeordneten internen Temperatursensor 16 erfasst und zur Steuereinrichtung 10, d. h. dem Steuermodul 14 als Temperatursignal zugeführt. Der externe Temperatursensor 20 ist an bzw. in dem Solarkollektor 24 so angeordnet, dass er dort die Temperatur des Heizmediums erfasst. Diese Temperatur wird als Temperatursignal über die Kommunikationsschnittstelle 22 an die Kommunikationsschnittstelle 18 der Steuereinrichtung 10 übertragen und wird so ebenfalls der Steuereinrichtung 10 bzw. deren Steuermodul 14 zugeführt. Auf Basis dieser zwei erfassten Temperaturwerte steuert bzw. regelt die Steuereinrichtung 10 über den Frequenzumrichter 12 die Drehzahl des Antriebsmotors 6 und damit den Durchfluss des Umwälzpumpenaggregates 2. So kann die gesamte Steuerung der solarthermischen Anlage von der Steuereinrichtung 10 des Umwälzpumpenaggregates 2 übernommen werden. Die Steuereinrichtung 10 kann insbesondere den Antriebsmotor 6 ein- und ausschalten und in der Drehzahl regeln, um den Durchfluss in Abhängigkeit des Wärmebedarfes im Flüssigkeitsspeicher 26 und des Wärmeangebotes im Solarkollektor 24 einstellen zu können, um so die erforderliche Wärmeabfuhr von dem Solarkollektor 24 und die erforderliche Wärmezufuhr zu dem Flüssigkeitsspeicher 26 zu bewirken.

Der Flüssigkeitsspeicher 26 ist beispielsweise ein Brauchwasserspeicher mit einem Zulauf 32 und einem Austritt 34. Durch den Zulauf 32 wird kaltes zu erwärmendes Brauchwasser zugeführt, durch den Austritt 34 wird warmes Brauchwasser entnommen, was beispielsweise durch Öffnen eines Wasserhahns geschieht. Bei Öffnen eines Wasserhahnes oder einer Zapfstelle stromabwärts des Austrittes 34 strömt automatisch kaltes Brauchwasser durch den Zulauf 32 in den Bodenbereich des Flüssigkeitsbehälters 26 nach und wird dann über den Wärmetauscher 30 erwärmt. Für den Fall, dass der Solarkollektor 24 nicht genügend Wärme zur Erwärmung der Flüssigkeit in dem Flüssigkeitsspeicher 26 bereitstellt, ist in diesem Beispiel in dem Flüssigkeitsspeicher 26 ein zusätzliches Heizelement 36 angeordnet, welches beispielsweise elektrisch oder über einen externen Heizkessel beheizt wird.

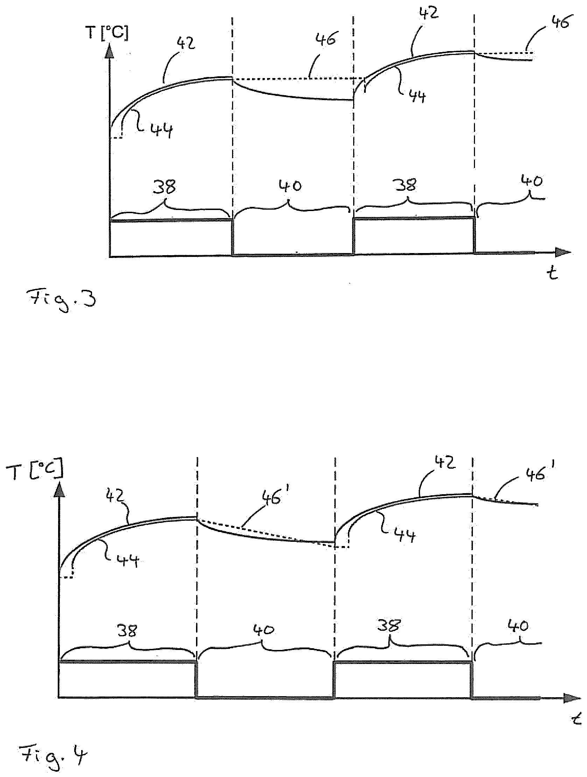

Fig. 3 zeigt den Temperaturverlauf T der Flüssigkeit in dem Flüssigkeitsspeicher 26 über der Zeit t. Dabei ist in den Zeitintervallen 38 das Umwälzpumpenaggregat 2 in Betrieb, d. h. der Antriebsmotor 6 läuft, während in den Zeitintervallen 40 das Umwälzpumpenaggregat 2, d. h. dessen Antriebsmotor 6 ausgeschaltet ist. Die Kurve 42 in Fig. 3 zeigt den Temperaturverlauf 42 im Inneren des Flüssigkeitsspeichers 26. Solange das Umwälzpumpenaggregat 2 in Betrieb ist, steigt in dem Zeitintervall 38 die Temperatur an. Nach Ausschalten des Umwälzpumpenaggregates 2 fällt die Temperatur dann langsam ab. Dies wird durch einen Wärmeverlust am Flüssigkeitsspeicher 26 selber bedingt oder durch Entnahme von Brauchwasser über den Austritt 34, was ein Nachströmen von Kaltwasser durch den Zulauf 32 bedingt. Der Wärmeverlust am Flüssigkeitsspeicher 26 hängt von der Art und Qualität seiner Isolierung ab.

Solange das Umwälzpumpenaggregat Flüssigkeit in dem Heizkreislauf 28 fördert, erfasst der interne Temperatursensor 16 eine Temperatur 44, welche im Wesentlichen der tatsächlichen Temperatur 42 in dem Flüssigkeitsspeicher 26 entspricht. Die Temperatur 44 wird gegebenenfalls geringfügig geringer als die Temperatur 42 zum selben Zeitpunkt sein, was durch Wärmeverluste im Wärmetauscher 30 sowie im Heizkreislauf 28 zwischen Wärmetauscher 30 und Umwälzpumpenaggregat 2 bedingt ist. Beim Einschalten des Antriebsmotors 6 gibt es eine gewisse Verzögerung bis der Temperatursensor 16 eine Temperatur 44 erfasst, welche im Wesentlichen der Temperatur 42 in dem Flüssigkeitsspeicher 26 entspricht. Diese Verzögerung ist abhängig vom Volumenstrom im Heizkreislauf 28 sowie der Leitungslänge zwischen Wärmetauscher 30 und Umwälzpumpenaggregat 2.

Mit Ausschalten des Antriebsmotors 6 wird kein weiteres Heizmedium von dem Wärmetauscher 30 zu dem Umwälzpumpenaggregat 2 gefördert, sodass der Temperatursensor 16 nicht mehr die aktuelle Temperatur im Flüssigkeitsspeicher 26 erfasst. Bei den Ausführungsbeispielen gemäß Fig. 3 ist das Steuermodul 14 so ausgebildet, dass es die weitere Steuerung bzw. Regelung auf Grundlage eines geschätzten Temperaturverlaufes 46 fortführt, welcher in Fig. 3 gestrichelt dargestellt ist. Bei dem Ausführungsbeispiel gemäß Fig. 3 ist der geschätzte Temperaturverlauf 46 ein konstanter Wert, welcher dem zuletzt erfassten Temperaturwert 44 während des Betriebes des Antriebsmotors 6 entspricht. Da in den Zeitintervallen 40, in denen das Pumpenaggregat 2 kein Heizmedium fördert, die Temperatur 42 im Flüssigkeitsspeicher 26 wie in Fig. 3 dargestellt, tatsächlich abfällt, kommt es zu einer Abweichung zwischen dem geschätzten Temperaturverlauf 46 und dem tatsächlichen Temperaturverlauf 42, wodurch sich in der Steuerung bzw. Regelung der gesamten Anlage Fehler ergeben könnten.

Fig. 4 zeigt eine Variante, bei der dieser Fehler verringert wird, indem der geschätzte Temperaturverlauf 46' nicht einen konstanten Wert aufweist, sondern einer abfallenden Kennlinie 46' folgt. Diese Kennlinie 46'oder ein Modell dieser Kennlinie 46' bzw. dem hinterlegten Modell kann im Steuermodul 14 hinterlegt sein und gegebenenfalls anpassbar sein, um sie an die tatsächliche Anlagenausgestaltung anzupassen. Insbesondere kann die abfallende Kennlinie 46' die Art der Isolierung des Flüssigkeitsspeichers 26 und damit den auftretenden Wärmeverlust sowie den durchschnittlichen Kaltwasserzulauf bei Brauchwasserentnahme berücksichtigen. So wird der Temperaturwert 46' bei ausgeschaltetem Antriebsmotors 6 von der Steuereinrichtung 10 bzw. dem Steuermodul 14 basierend auf der hinterlegten Kennlinie bzw. dem hinterlegten Modell ausgehend von dem letzten gemessenen Temperaturwert 44 bei Betrieb des Antriebsmotors 8 extrapoliert bzw. geschätzt. Auf diese Weise kann auch ohne die Anordnung eines Temperatursensors im Flüssigkeitsspeicher 26 die Temperatur der Flüssigkeit im Flüssigkeitsspeicher 26 bei dem Temperatursensor 16 im Umwälzpumpenaggregat 2 erfasst oder, sofern das Umwälzpumpenaggregat 2 kein Heizmedium fördert, von der Steuereinrichtung 10 geschätzt werden, wobei dieser Schätzung eine zuvor in der Steuereinrichtung 10 hinterlegte und angepasste Kennlinie bzw. ein hinterlegtes und angepasstes Modell, insbesondere abfallende Kennlinie zugrundegelegt werden kann, welche den zu erwartenden Temperaturverlauf über der Zeit ausgehend von dem zuletzt tatsächlich gemessenen Temperaturwert wiedergibt.

### Bezugszeichenliste

- 2: Umwälzpumpenaggregat
- 4: Pumpengehäuse
- 6: Antriebsmotor
- 8: Anschlussstutzen
- 10: Steuereinrichtung
- 12: Frequenzumrichter
- 14: Steuermodul
- 16: interner Temperatursensor
- 18: Kommunikationsschnittstelle der Steuereinrichtung 10
- 20: externer Temperatursensor
- 22: Kommunikationsschnittstelle des Temperatursensors 20
- 24: Solarkollektor
- 26: Flüssigkeitsspeicher
- 28: Heizkreislauf
- 30: Wärmetauscher
- 32: Zulauf
- 34: Austritt
- 36: Heizelement
- 38: Zeitintervall (Pumpe ein)
- 40: Zeitintervall (Pumpe aus)
- 42: Temperaturverlauf
- 44: Temperaturverlauf
- 46, 46': geschätzter Temperaturverlauf

- T: Temperatur
- †: Zeit

## Patentansprüche

1. Umwälzpumpenaggregat (2) mit einem elektrischen Antriebsmotor (6) und einer Steuereinrichtung (10), wobei
in dem Umwälzpumpenaggregat (2) zumindest ein interner Temperatursensor (16) angeordnet ist, welcher die Temperatur des von dem Umwälzpumpenaggregat (6) geförderten Medium erfasst und ein korrespondierendes Temperatursignal (42) an die Steuereinrichtung (10) ausgibt, wobei die Steuereinrichtung (10) derart ausgebildet ist, dass sie basierend auf dem Temperatursignal (42) des internen Temperatursensors (16) die Temperatur der Flüssigkeit in einem mit dem Umwälzpumpenaggregat (2) über einen Heizkreislauf (28) verbundenen Flüssigkeitsspeicher (26) näherungsweise bestimmt, **dadurch gekennzeichnet, dass** die Steuereinrichtung in das Umwälzpumpenaggregat integriert ist, und dass sie bei Stillstand des elektrischen Antriebsmotors (6) basierend auf einem zuvor bei Betrieb des elektrischen Antriebsmotors (6) von dem internen Temperatursensor (16) ausgegebenen Temperatursignal (42) im weiteren zeitlichen Verlauf (t) näherungsweise die Temperatur (46; 46') der Flüssigkeit in einem mit dem Umwälzpumpenaggregat (2) über einen Heizkreislauf verbundenen Flüssigkeitsspeicher (26) bestimmt.

2. Umwälzpumpenaggregat nach Anspruch 1, **dadurch gekennzeichnet, dass** die Steuereinrichtung (10) zur Steuerung des elektrischen Antriebsmotors (6) ausgebildet ist.

3. Umwälzpumpenaggregat nach einem der vorangehenden Ansprüche, **dadurch gekennzeichnet, dass** die Steuereinrichtung (10) eine Kommunikationsschnittstelle (18) aufweist, welche zur Kommunikation mit zumindest einer externen Einrichtung (20), insbesondere einem Sensor, Aktor und/oder zumindest einer externen Steuerung ausgebildet ist.

4. Umwälzpumpenaggregat nach Anspruch 3, **dadurch gekennzeichnet, dass** die Kommunikationsschnittstelle (18) zur Kommunikation mit zumindest einem externen Temperatursensor (20) ausgebildet ist.

5. Umwälzpumpenaggregat nach Anspruch 4, **dadurch gekennzeichnet, dass** die Steuereinrichtung (10) derart ausgebildet ist, dass sie den elektrischen Antriebsmotor (6) in Abhängigkeit des Temperatursignals (42) von dem internen Temperatursensor (16) und eines Temperatursignals von dem zumindest einen externen Temperatursensor (20) in seiner Drehzahl regelt.

6. Umwälzpumpenaggregat nach einem der Ansprüche 3 bis 5, **dadurch gekennzeichnet, dass** die Kommunikationsschnittstelle (18) als drahtlose Schnittstelle und insbesondere als Funkschnittstelle ausgebildet ist.

7. Umwälzpumpenaggregat nach einem der Ansprüche 3 bis 6, **dadurch gekennzeichnet, dass** die Kommunikationsschnittstelle (18) zur automatischen Kopplung mit einer Kommunikationsschnittstelle (22) der zumindest einen externen Einrichtung (20) ausgebildet ist.

8. Umwälzpumpenaggregat nach Anspruch 7, **dadurch gekennzeichnet, dass** die Kommunikationsschnittstelle (18) derart ausgebildet ist, dass sie automatisch eine Kopplung mit einer Kommunikationsschnittstelle (22) einer zur Kopplung geeigneten externen Einrichtung (20) bewirkt, sofern diese externe Einrichtung (20) noch nicht mit einem anderen Pumpenaggregat gekoppelt ist.

9. Umwälzpumpenaggregat nach einem der vorangehenden Ansprüche, **dadurch gekennzeichnet, dass** die Steuereinrichtung (10) zur Steuerung einer solarthermischen Anlage mit zumindest einem Flüssigkeitsspeicher (26) und zumindest einem Solarkollektor (24) zum Erwärmen der Flüssigkeit in dem Flüssigkeitsspeicher (26) ausgebildet ist, und das Umwälzpumpenaggregat (2) zum Einbau in einen Heizkreislauf (28) zwischen dem Flüssigkeitsspeicher (26) und dem Solarmodul (24) vorgesehen ist.

10. Umwälzpumpenaggregat nach einem der vorangehenden Ansprüche, **dadurch gekennzeichnet, dass** die Steuereinrichtung (10) derart ausgestaltet ist, dass der Bestimmung der Temperatur der Flüssigkeit in dem Flüssigkeitsspeicher (26) eine vorgegebene abfallende Kennlinie (46') für den zeitlichen Verlauf der Temperatur zugrundegelegt wird, wobei die Kennlinie (46') vorzugsweise linear oder exponentiell abfallend verläuft.

11. Solarthermische Anlage mit zumindest einem Solarkollektor, zumindest einem Flüssigkeitsspeicher (26) und einem in einem Heizkreislauf (28) zwischen dem Solarkollektor (24) und dem Flüssigkeitsspeicher (26) angeordneten Umwälzpumpenaggregat (2) nach einem der vorangehenden Ansprüche.

12. Solarthermische Anlage nach Anspruch 11, **dadurch gekennzeichnet, dass** an dem Solarkollektor (24) zumindest ein externer Temperatursensor (20) angeordnet ist, der die Temperatur eines Heizmediums in dem Solarkollektor (24) erfasst und eine Kommunikationsschnittstelle (22) aufweist, über welche er mit der Kommunikationsschnittstelle der Steuereinrichtung (10) des Umwälzpumpenaggregates (2) derart gekoppelt ist, dass die Steuereinrichtung (10) Temperatursignale von dem externen Temperatursensor (20) empfängt.

13. Solarthermische Anlage nach Anspruch 11 oder 12, **dadurch gekennzeichnet, dass** der Heizkreislauf (28) mit dem Flüssigkeitsspeicher (26) über einen Wärmetauscher (30) verbunden ist, welcher vorzugsweise in dem Flüssigkeitsspeicher (26) gelegen ist.

## Claims

1. A circulation pump assembly (2) with an electric drive motor (6) and with a control device (10), wherein at least one internal temperature sensor (16) is arranged in the circulation pump assembly (2) and detects the temperature of the medium delivered by the circulation pump assembly (6) and outputs a corresponding temperature signal (42) to the control device (10), wherein the control device (10) is designed in a manner such that on the basis of the temperature signal (42) of the internal temperature sensor (16), it approximately determines the temperature of the fluid in a fluid storage means (26) which is connected to the circulation pump assembly (2) via a heating circuit (28), **Fehler! Textmarke nicht definiert.characterised in that** the control device (10) is integrated into the circulation pump assembly (2) and that given a standstill of the electrical drive motor (6), on the basis of a temperature signal (42) which is outputted previously by the internal temperature sensor (16) on operation of the electric drive motor (6), in the further temporal course (t), it approximately determines the temperature (46; 46') of the fluid in a fluid storage means (26) connected to the circulation pump assembly (2) via a heating circuit.

2. A circulation pump assembly according to claim 1, **characterised in that** the control device (10) is designed for the control of the electric drive motor (6).

3. A circulation pump assembly according to one of the preceding claims, **characterised in that** the control device (10) comprises a communication interface (18) which is designed for the communication with at least one external device (20), in particular with a sensor, actuator and/or at least one external control.

4. A circulation pump assembly according to claim 3, **characterised in that** the communication interface (18) is designed for communication with at least one external temperature sensor (20).

5. A circulation pump assembly according to claim 4, **characterised in that** the control device (10) is designed in a manner such that it regulates the electric drive motor (10) with regard to its speed, in dependence on the temperature signal (42) from the internal temperature sensor (16) and on a temperature signal from the at least one external temperature sensor (20).

6. A circulation pump assembly according to one of the claims 3 to 5, **characterised in that** the communication interface (18) is designed as a wireless interface and in particular as a radio interface.

7. A circulation pump assembly according to one of the claims 3 to 6, **characterised in that** the communication interface (18) is designed for the automatic coupling to a communication interface (22) of the at least one external device (20).

8. A circulation pump assembly according to claim 7, **characterised in that** the communication interface (18) is designed in a manner such that it automatically effects a coupling to a communication interface (22) of an external device (20) suitable for coupling, inasmuch as this external device (20) is not yet coupled to another pump assembly.

9. A circulation pump assembly according to one of the preceding claims, **characterised in that** the control device (10) is designed for the control of a solar-thermal installation with at least one fluid storage means (26) and with at least one solar collector (24) for heating the fluid in the fluid storage means (26), and the circulation pump assembly (2) is provided for installation into a heating circuit (28) between the fluid storage means (26) and the solar collector (24).

10. A circulation pump assembly according to one of the preceding claims, **characterised in that** the control device (10) is designed in a manner such that the evaluation of the temperature of the fluid in the fluid storage means (26) is based on a predefined falling characteristic curve (46') for the temporal course of the temperature, wherein the characteristic curve (46') runs in a preferably linearly or exponentially falling manner.

11. A solar-thermal installation with at least one solar collector, at least one fluid storage means (26) and a circulation pump assembly (2) according to one of the preceding claims, said assembly being arranged in a heating circuit (28) between the solar collector (24) and the fluid storage means (26).

12. A solar-thermal installation according to claim 11, **characterised in that** at least one external temperature sensor (20) is arranged on the solar collector (24) and detects the temperature of a heating medium in the solar collector (24) and comprises a communication interface (22), via which it is coupled to the communication interface of the control device (10) of the circulation pump assembly (2) in a manner such that the control device (10) receives temperature signals from the external temperature sensor (20).

13. A solar-thermal installation according to claim 11 or 12, **characterised in that** the heating circuit (28) is connected to the fluid storage means (26) via a heat exchanger (30) which is preferably situated in the fluid storage means (26).

## Revendications

1. Module de pompe de circulation (2) avec un moteur d'entraînement électrique (6) et un dispositif de commande (10), dans le module de pompe de circulation (2), au moins un capteur interne de température (16) étant disposé qui capte la température du médium transporté par le module de pompe de circulation (6) et émet au dispositif de commande (10) un signal de température (42) correspondant,
le dispositif de commande (10) étant configuré de façon qu'il détermine approximativement, sur la base du signal de température (42) du capteur interne de température (16), la température du liquide dans un réservoir de liquide (26) relié au module de pompe de circulation (2) via un circuit de chauffage (28),
**caractérisé en ce que**
le dispositif de commande est intégré dans le module de pompe de circulation et
**en ce que**, en cas d'arrêt du moteur d'entraînement électrique (6), il détermine approximativement, sur la base d'un signal de température (42) émis préalablement pendant le fonctionnement du moteur d'entraînement électrique (6), pendant le temps (t) qui suit, la température (46 ; 46') du liquide dans un réservoir de liquide (26) relié au module de pompe de circulation (2) via un circuit de chauffage.

2. Module de pompe de circulation selon la revendication 1, **caractérisé en ce que** le dispositif de commande (10) est conçu pour la commande du moteur d'entraînement électrique (6).

3. Module de pompe de circulation selon l'une des revendications précédentes, **caractérisé en ce que** le dispositif de commande (10) comprend une interface de communication (18) qui est conçue pour la communication avec au moins un dispositif externe (20), notamment un capteur, actionneur et/ou au moins une commande externe.

4. Module de pompe de circulation selon la revendication 3, **caractérisé en ce que** l'interface de communication (18) est conçue pour la communication avec au moins un capteur externe de température (20).

5. Module de pompe de circulation selon la revendication 4, **caractérisé en ce que** le dispositif de commande (10) est conçu de façon qu'il règle le moteur d'entraînement électrique (6) en vitesse de rotation en fonction du signal de température (42) du capteur interne de température (16) et d'un signal de température dudit au moins un capteur externe de température (20).

6. Module de pompe de circulation selon l'une des revendications 3 à 5, **caractérisé en ce que** l'interface de communication (18) est conçue comme interface sans fil et notamment comme interface radio.

7. Module de pompe de circulation selon l'une des revendications 3 à 6,
**caractérisé en ce que** l'interface de communication (18) est conçue pour un couplage automatique avec une interface de communication (22) dudit au moins un dispositif externe (20).

8. Module de pompe de circulation selon la revendication 7, **caractérisé en ce que** l'interface de communication (18) est conçue de façon qu'elle fasse établir automatiquement un couplage avec une interface de communication (22) d'un dispositif externe (20) apte à un couplage, si ce dispositif externe (20) n'est pas encore couplé avec un autre module de pompe.

9. Module de pompe de circulation selon l'une des revendications précédentes, **caractérisé en ce que** le dispositif de commande (10) est conçu pour la commande d'une installation thermosolaire avec au moins un réservoir de liquide (26) et au moins un colleteur solaire (24) pour le chauffage du liquide dans le réservoir de liquide (26) et que le module de pompe de circulation (2) est prévu pour une installation dans un circuit de chauffage (28) entre le réservoir de liquide (26) et le module solaire (24).

10. Module de pompe de circulation selon l'une des revendications précédentes, **caractérisé en ce que** le dispositif de commande (10) est conçu de façon telle que la détermination de la température du liquide dans le réservoir de liquide (26) soit basée sur une courbe caractéristique (46') décroissante prédéterminé de la température en fonction du temps, la courbe caractéristique (46') étant de préférence linéairement ou exponentiellement décroissante.

11. Installation thermosolaire avec au moins un collecteur solaire, au moins un réservoir de liquide (26) et un module de pompe de circulation (2) selon l'une des revendications précédentes disposé dans un circuit de chauffage (28) entre le module solaire (24) et le réservoir de liquide (26).

12. Installation thermosolaire selon la revendication 11, **caractérisée en ce qu'**il est disposé sur le collecteur solaire (24) au moins un capteur externe de température (20) qui capte la température d'un médium de chauffage dans le collecteur solaire (24) et comprend une interface de communication (22) par laquelle il couplé avec l'interface de communication du dispositif de commande (10) du module de pompe de circulation (2) de façon telle que le dispositif de commande (10) reçoive des signaux de température du capteur externe de température (20).

13. Installation thermosolaire selon la revendication 11 ou 12, **caractérisée en ce que** le circuit de chauffage (28) est relié au réservoir de liquide (26) par un échangeur de chaleur (30) qui est disposé de préférence dans le réservoir de liquide (26).
